# EUROPÄISCHE PATENTSCHRIFT

(11) **EP 3 314 227 B1**
(45) Veröffentlichungstag und Bekanntmachung des Hinweises auf die Patenterteilung: **22.04.2020**
(21) Anmeldenummer: 16724640.4
(22) Anmeldetag: 24.05.2016
(51) Int. Cl.: G01L 19/00, G01L 19/14

(54) **DRUCKSENSORMODUL MESSANORDNUNG MIT EINEM DRUCKSENSORMODUL**
PRESSURE SENSOR MODULE, MEASURING ARRANGEMENT WITH A PRESSURE SENSOR MODULE
MODULE DE CAPTEUR DE PRESSION, DISPOSITIF DE MESURE ÉQUIPÉ D'UN MODULE DE CAPTEUR DE PRESSION

(30) Priorität: 25.06.2015 DE 102015110259
(43) Veröffentlichungstag der Anmeldung: 02.05.2018
(73) Patentinhaber: Endress+Hauser SE+Co. KG, 79689 Maulburg (DE)
(72) Erfinder: RECH, Volkmar, 66346 Püttlingen (DE); LOPATIN, Sergej, 79540 Lörrach (DE); NOWAK, Claudia, 79106 Freiburg (DE)
(74) Vertreter: Andres, Angelika Maria
(86) Internationale Anmeldenummer: PCT/EP2016/061688
(87) Internationale Veröffentlichungsnummer: WO 2016/206900

(56) Entgegenhaltungen:
- DE-A1- 4 234 290
- US-A- 4 295 117
- US-A1- 2004 255 645
- US-A1- 2005 028 603

## Beschreibung

Die vorliegende Erfindung betrifft eine Messanordnung mit einem Drucksensormodul und einem Fluidmodul gemäß Anspruch 1. Messananordnungen mit Drucksensormodulen umfassen gewöhnlich eine Druckmesszelle, und ein Bauteil zur Montage der Druckmesszelle in der Messanordnung.

US 2005/0028603 A1 offenbart ein Drucksensormodul mit einem Kunststoffgehäuse und einer piezoresistiven Druckmesszelle die eine Messmembran und einen Gegenkörper umfasst die Membrankörper trägt, wobei der Gegenkörper an einer vorstehenden Montagefläche in einer Kammer im Innern des Kunststoffgehäuses anliegt und mit einem Klebstoff fixiert ist. Die Messmembran ist über eine Bohrung von der dem Gegenkörper zugewandten Seite mit einem zu messenden Druck beaufschlagbar.

US 4,295,117 offenbart ein Drucksensormodul mit einem Kunststoffgehäuse und einer piezoresistiven Druckmesszelle, die einen Membrankörper mit einer Messmembran und einen Gegenkörper umfasst der den Membrankörper trägt, wobei der Gegenkörper rückseitig an einem Glassockel fixiert ist der seinerseits den Boden einer Kammer im Innern des Kunststoffgehäuses bildet. Eine dem Sockel abgewandte Öffnung der Kammer ist mit einem Deckel verschlossen, der eine kleinere Öffnung aufweist, durch den ein zu messender Druck in die Kammer eingeleitet wird.

US 2004/0255645 A1 offenbart eine Inline-Messanordnung mit einer Druckmesszelle deren Messmembran mit dem Druck in einem Kanal eines Fluidmoduls beaufschlagbar ist, wobei die Druckmesszelle mit der Stirnseite der Messmembran voran mittels einer rückseitigen Montageanordnung gegen einen Dichtring gespannt ist, der an einer Dichtfläche des Fluidmoduls anliegt.

Das Patent DE 10133066 B4 offenbart beispielsweise ein Druckmessgerät, welches eine Druckmesszelle aufweist, die in eine Hülse eingefasst ist. Die Hülse weist an einem ersten Ende eine sich radial nach innen erstreckende Schulter auf, gegen welche die Druckmesszelle eingespannt ist, wobei die Druckmesszelle durch eine von der Schulter begrenzte Öffnung mit einem Druck beaufschlagbar ist, wobei das durch die Druckmesszelle und die Hülse gebildete Drucksensormodul in eine Hülse eingebaut ist.

Die Offenlegungsschrift DE 102014207394 A1 beschreibt einen Drucksensor mit einer Druckmesszelle die auf einem als Prozessanschluss dienenden Metallblock mittels eines deckelförmigen Stützelements gehalten wird, wobei die Druckmesszelle zwischen einem elastischen Dichtring und dem Stützelement axial eingespannt ist, der Dichtring auf der membranseitigen Stirnseite der Druckmesszelle aufliegt, das Stützelement mit einem Deckelbereich und einem dazu umgebogenen Rand kappenartig ausgebildet und über die Druckmesszelle gestülpt ist, die Innenkontur des Stützelements näherungsweise der Außenkontur der Druckmesszelle entspricht und das Stützelement stoffschlüssig mit dem Prozessanschluss verbunden ist. Das Stützelement dient bei der axialen Einspannung der Druckmesszelle als Widerlager.

Die Offenlegungsschrift DE 10308820 A1 beschreibt eine keramische Druckmesszelle. Zum Zweck der chemischen und thermischen Beständigkeit für eine Vielzahl von Chemikalien ist auf der medienberührenden Messmembran der Druckmesszelle eine Kunststoff-Folie aufgebracht.

Die Offenlegungsschrift DE 04234290 A1 offenbart einen Drucksensor mit einer Druckmesszelle in einem definierten Abstand an einem Gegenkörper angebracht ist. Zur Aufnahme der Druckmesszelle weist der Drucksensor ein Gehäuse mit einer Durchgangsöffnung auf, deren Durchmesser in einem vorderen Bereich des Gehäuses so weit abnimmt, dass stirnseitig zwischen dem Gehäuse der darin bündig eingesetzten Druckmesszelle ein Ringspalt verbleibt, der mit einer Radialdichtung abgedichtet ist.

Die Offenlegungsschrift EP 0 1939600 A2 betrifft einen möglichst korrosionsfreien Druckmessaufnehmer, der einen geringen Druckverlust bewirkt, mit einem Messaufnehmergehäuse, das einen geraden, rohrförmigen Leitungsabschnitt aufweist, der im Messbetrieb von einem Medium, dessen Druck zu messen ist, durchströmt wird, an dessen einem Ende ein konisch in Richtung des Leitungsabschnitts zulaufender Einlass angeformt ist, über den das Medium zuströmt, an dessen anderem Ende ein konisch in Richtung des Leitungsabschnitts zulaufender Auslass angeformt ist, über den das Medium abfließt, der eine Ausnehmung aufweist, in die eine keramische Druckmesszelle mit einer druckempfindlichen Membran unter Zwischenfügung einer Messzellendichtung derart eingesetzt ist, dass das Messaufnehmergehäuse eine Frontseite der Druckmesszelle außenseitlich umfasst, und die Messzellendichtung eine Abdichtung zwischen der Druckmesszelle und dem Messaufnehmergehäuse bewirkt, und einem Messzellengehäuse, das unter Zwischenfügung einer Gehäusedichtung unmittelbar auf dem Messaufnehmergehäuse montiert ist, das eine Ausnehmung aufweist, die eine Rückseite der Druckmesszelle außenseitlich umschließt, bei dem die Druckmesszelle zwischen dem Messzellengehäuse und dem Messaufnehmergehäuse in axialer Richtung eingespannt ist.

Bei den genannten Dokumenten zum Stand der Technik ist die Druckmesszelle stets frontseitig gegen eine Dichtung eingespannt, welche Positionierungstoleranzen ausgleicht.

Es besteht jedoch Bedarf an Drucksensormodulen, die einerseits einfach zu montieren und auszutauschen sind, und die andererseits ihre Position reproduzierbar mit minimalen Toleranzen einnehmen. Es ist die Aufgabe der vorliegenden Erfindung, Messanordnungen mit solchen Sensormodulen bereitzustellen.

Die Aufgabe wird erfindungsgemäß gelöst durch die Messanordnung gemäß dem unabhängigen Patentanspruch 1.

Die erfindungsgemäße Messanordnung umfasst ein Drucksensormodul; und ein Fluidmodul, wobei das Drucksensormodul, eine Druckmesszelle; und einen Montagering umfasst, wobei die Druckmesszelle einen Gegenkörper, eine Messmembran und einen Wandler zum Wandeln einer druckabhängigen Auslenkung der Messmembran in mindestens ein elektrisches oder optisches Signal aufweist, wobei die Messmembran entlang eines umlaufenden Randes druckdicht mit dem Gegenkörper verbunden ist, wobei zwischen dem Gegenkörper und der Messmembran eine Messkammer gebildet ist, wobei der Gegenkörper eine der Messmembran abgewandte Rückseite aufweist, die einen umlaufenden Randbereich aufweist, wobei der Montagering eine Montageöffnung aufweist, wobei der Montagering eine ringförmig umlaufende, innere Montagefläche in der Montageöffnung aufweist, der Montagering eine äußere Montagefläche außerhalb der Montageöffnung des Montagerings aufweist, wobei die innere Montagefläche eine innere axiale Anschlagebene zur Montage der Druckmesszelle definiert, wobei die Druckmesszelle mit der Rückseite voran in die Montageöffnung eingesetzt ist, wobei der Randbereich der Rückseite des Gegenkörpers mit der inneren Montagefläche verklebt ist, wobei die innere Montagefläche eine Schulter umfasst, welche sich von einer inneren Mantelfläche des Montagerings radial einwärts erstreckt, wobei die innere Montagefläche zwischen der axialen Anschlagfläche und der inneren Mantelfläche eine ringförmig umlaufende Vertiefung aufweist, um überschüssigen Klebstoff beim Verkleben der axialen Anschlagfläche mit der Rückseite des Gegenkörpers aufzunehmen, wobei das Fluidmodul mindestens einen Fluidkanal und eine Sensormodulaufnahme aufweist, welche mit dem Fluidkanal kommuniziert, wobei erfindungsgemäß die Sensormodulaufnahme eine zur äußeren Montagefläche des Montagerings komplementäre Gegenfläche aufweist, die äußere Montagefläche durch Anliegen an der Gegenfläche eine Orientierung einer Montageachse des Montagerings bezüglich der Gegenfläche festlegt, wobei ein Normalenvektor der inneren axialen Anschlagebene parallel zur Montageachse verläuft, die Messmembran eine dem Gegenkörper abgewandte Stirnseite aufweist, welche mit einem zu messenden, in dem Fluidkanal herrschenden Druck beaufschlagbar ist, und die äußere Montagefläche gegen die Gegenfläche gespannt ist, wobei die Gegenfläche eine Ebene definiert, deren Normalenvektor gegenüber einem Normalenvektor zur Stirnseite der Messmembran um nicht mehr als 10 mrad, insbesondere nicht mehr als 7 mrad und bevorzugt nicht mehr als 4 mrad verkippt ist.

Durch die Gestaltung der inneren Montagefläche kann die Druckmesszelle unabhängig von Toleranzen bei der Dosierung und Verteilung des Klebstoffs zwischen der Druckmesszelle und dem Montagering in einer hinreichend genau definierten Lage bezüglich des Montagerings positioniert werden.

In einer Weiterbildung der Erfindung weist die Klebstoffschicht zwischen der axialen Anschlagfläche und der Rückseite des Gegenkörpers eine Stärke von nicht mehr als 40 µm, insbesondere nicht mehr als 20 µm und bevorzugt nicht mehr als 10 µm auf.

In einer Weiterbildung der Erfindung ist ein Normalenvektor zu einer durch den Randbereich der Rückseite des Gegenkörpers definierten Ebene gegenüber dem Normalenvektor der axialen Anschlagfläche um nicht mehr als 2,4 mrad, insbesondere nicht mehr als 1,2 mrad und bevorzugt nicht mehr als 0,6 mrad verkippt.

In einer Weiterbildung der Erfindung verläuft eine durch den umlaufenden Randbereich der Rückseite des Gegenkörpers definierte Ebene bis auf Fertigungstoleranzen parallel zu einer durch die Stirnseite der Messmembran definierte Ebene. In einer Ausgestaltung dieser Weiterbildung der Erfindung weicht die durch den Randbereich der Rückseite des Gegenkörpers definierte Ebene von der Parallelität zur durch die Stirnseite der Messmembran definierte Ebene aufgrund von Fertigungstoleranzen um nicht mehr als 3 mrad, insbesondere nicht mehr als 1,5 mrad und bevorzugt nicht mehr als 1 mrad ab.

In einer Weiterbildung der Erfindung weist die Vertiefung zwischen der Anschlagfläche und der inneren Mantelfläche in einem Längsschnitt durch die Montageachse eine Fläche von nicht weniger als 0,06 mm², insbesondere nicht weniger als 0,1 mm² und bevorzugt nicht weniger als 0,15 mm² auf.

In einer Weiterbildung der Erfindung weist die Druckmesszelle einen keramischen Werkstoff, insbesondere Korund auf.

In einer Weiterbildung der Erfindung weist der Montagering einen glasfaserverstärkten Kunststoff auf.

In einer Weiterbildung der Erfindung weist der Fluidkanal einen der Messmembran gegenüberliegenden Wandbereich auf, wobei der mittlere Abstand des Wandbereichs von der Messmembran oder von einer die Messmembran abdeckende Dichtungsmatte nicht mehr als ein Fünftel, insbesondere nicht mehr als ein Zehntel, und bevorzugt nicht mehr als ein Zwanzigstel des Durchmessers der Messmembran beträgt.

In einer Weiterbildung der Erfindung weist die Sensormodulaufnahme eine erste Dichtfläche auf, wobei der Montagering stirnseitig eine zweite Dichtfläche aufweist, wobei die erste Dichtfläche und die zweite Dichtfläche einander zugewandt sind, wobei mindestens eine der Dichtflächen der Mantelfläche der Druckmesszelle zugewandt ist, und wobei zwischen den Dichtflächen und der Mantelfläche der Druckmesszelle ein Dichtring elastisch eingespannt ist.

Die Erfindung wird nun anhand des in den Zeichnungen dargestellten Ausführungsbeispiels näher erläutert.

Es zeigt:
Fig. 1: einen Längsschnitt durch ein Ausführungsbeispiel einer erfindungsgemäßen Messanordnung; und
Fig. 2: einen vereinfachten Längsschnitt durch ein Ausführungsbeispiel des erfindungsgemäßen Sensormoduls der Messanordnung aus Fig. 1.

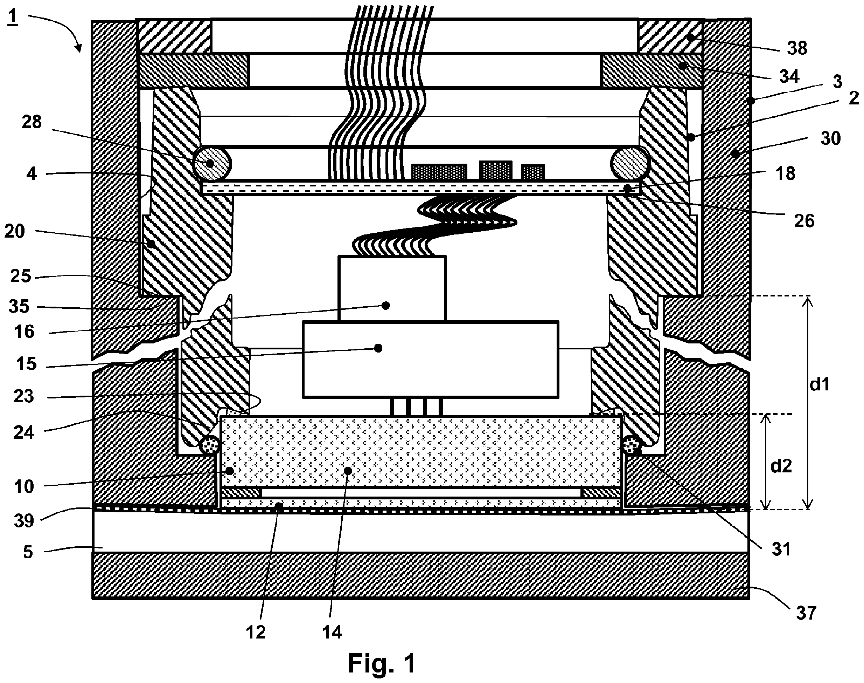

Das in Fig. 1 gezeigte Ausführungsbeispiel einer erfindungsgemäßen Messanordnung 1 umfasst ein Sensormodul 2 und ein Fluidmodul 3, wobei das Fluidmodul 3 eine Sensormodulaufnahme 4 aufweist, in welcher das Sensormodul 2 angeordnet ist.

Das Sensormodul 2 umfasst eine keramische Druckmesszelle 10 mit einer Messmembran 12 und einem Gegenkörper 14, wobei die Messmembran 12 mit dem Gegenkörper unter Bildung einer Messkammer zwischen der Messmembran und dem Gegenkörper entlang einer umlaufenden Fügestelle druckdicht verbunden sind. Die Druckmesszelle 10 umfasst weiterhin einen elektrischen Wandler zum Wandeln einer druckabhängigen Auslenkung der Messmembran in ein elektrisches Signal, insbesondere einen kapazitiven oder resistiven Wandler. Der derzeit bevorzugte kapazitive Wandler umfasst in der Messkammer mindestens eine erste Elektrode an der Messmembran 12, die dem Gegenkörper 14 zugewandt ist und mindestens eine zweite Elektrode am Gegenkörper14, die der Messmembran zugewandt ist. Die Elektroden sind nicht im Einzelnen dargestellt, da es im Zusammenhang mit der vorliegenden Erfindung der Wandler nicht von Interesse ist. Die Kapazität zwischen den Elektroden wird von einer Hybridschaltung 15 ausgewertet, die auf einer der Messmembran 12 abgewandten Rückseite gekapselt angeordnet ist. Über eine Steckverbinderkupplung 16 und eine Leiterplatte 18, welche beispielsweis eine Impedanzwandlerschaltung aufweisen kann, ist die Hybridschaltung 15 mittels eines Kabels an eine übergeordnete Einheit anschließbar. Durch einen Kabelabschnitt zwischen der Steckverbinderkupplung 16 und der Leiterplatte 18 ist die Leiterplatte 18 mechanisch von der Hybridschaltung entkoppelt, so dass auf die Leiterplatte einwirkende Zugkräfte nicht über Schaltungskomponenten auf die Druckmesszelle 10 übertragen werden können.

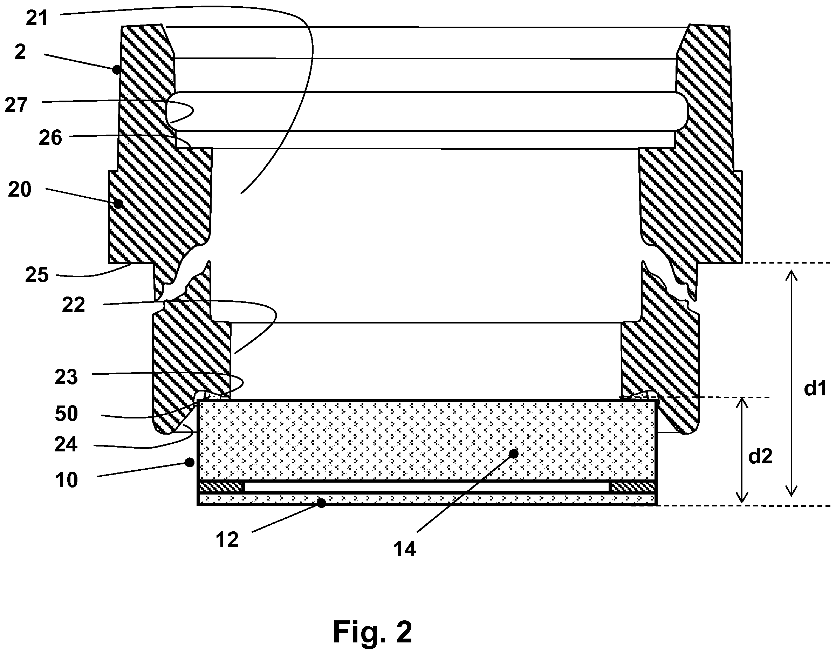

Das Sensormodul 2 umfasst weiterhin einen Montagering 20, welcher die Druckmesszelle 10 trägt und andererseits die definierte Montage des Sensormoduls 2 in der Sensormodulaufnahme 4 des Fluidmoduls 3 ermöglicht. Der Montagering 20 weist einen Kunststoff, auf beispielsweise ein Polyamid, das unter der Bezeichnung Grivory ® erhältlich ist. Der Montagering 20 weist eine als durchgehende, gestufte Bohrung ausgebildete Montageöffnung 21 auf, welche verschiedene Konturelemente aufweist, die für die Montage der Druckmesszelle 10 Bedeutung haben, und welche im Folgenden unter Bezugnahme auf Fign. 1 und 2 erläutert werden.

Die Montageöffnung 21 eine ringförmig umlaufende, innere Montagefläche 23 auf, welche eine innere axiale Anschlagebene zur Montage der Druckmesszelle 10 definiert. Die innere Montagefläche 23 ist durch eine Schulter 22 gebildet, welche sich von einer inneren Mantelfläche des Montagerings 20 radial einwärts erstreckt. Die Montagefläche 23 weist zwischen der axialen Anschlagfläche und der inneren Mantelfläche des Montagerings eine ringförmig umlaufende Vertiefung auf.

Die Druckmesszelle 10 ist mit dem Gegenkörper 14 voran in die Montageöffnung 21 eingesetzt, wobei der Gegenkörper 14 mit der Montagefläche 23 mittels einer Klebstoffschicht 50 verklebt ist. Somit ist die Position der Messzelle 10 bis auf die Stärke der Klebstoffschicht 50 zwischen der axialen Anschlagfläche und der Rückseite der Druckmesszelle 10 festgelegt. Die umlaufende Vertiefung dient dazu, überflüssigen, beim Anpressen der Druckmesszelle verdrängten Klebstoff aufzunehmen, so dass bei ausreichender Beschichtung mit Klebstoff bei der Montage die resultierende, gehärtete Klebstoffschicht im Ergebnis eine Stärke von nicht mehr als 50 µm insbesondere nicht mehr als 25 µm aufweist.

Dies ist insofern beachtlich, als ein Fig. 3 dargestelltes Maß d1, welches den axialen Abstand zwischen einer äußeren axialen Anschlagfläche 25 des Montagerings 20 und der Stirnseite der Messmembran 12 beschreibt, für den Betrieb der Messanordnung kritisch ist, und die Stärke der Klebstoffschicht 50 über ein Maß d2, welches den axialen Abstand zwischen der axialen Anschlagfläche der Montagefläche 23 und der Stirnseite der Messmembran 12 beschreibt, additiv in dieses Maß eingeht. Abgesehen vom dem Maß d2, ist es weiterhin wichtig, dass eine durch die Stirnseite der Messmembran 12 definierte Ebene möglichst parallel zu einer durch die äußere axiale Anschlagfläche 25 definierten Ebene verläuft. Auch dies wird erleichtert wenn bei der Montage der Druckmesszelle überflüssiger Klebstoff in die Vertiefung der Montagefläche 23 verdrängt werden kann.

An der druckmesszellenseitigen Stirnfläche weist der Montagering 20 eine einwärts geneigte erste Dichtungsfläche 24 auf, an welcher im montierten Zustand ein elastischer O-Ring 31 anliegt, der zwischen der Dichtfläche 24, der Mantelfläche des Gegenkörpers der Druckmesszelle 12, und einer durch eine radiale Stufe in der Sensormodulaufnahme 4 gebildeten zweiten Dichtfläche eingespannt ist.

Die Montageöffnung 21 weist weiterhin eine der Druckmesszelle 12 abgewandte, zweite axiale Anschlagfläche 26 auf, an welcher die Leiterplatte 18 anliegt, von der sich ein Kabel zum Anschluss an eine übergeordnete Einheit erstreckt. Die Leiterplatte 18 ist beispielsweise mit einem Sprengring 28 gesichert, welcher in eine Ringnut 27 in der Montageöffnung 21 eingreift. Anders als in Fig. 1 sind in Fig. 2. die Hybridschaltung und weitere Elektronikkomponenten im Sinne der Übersichtlichkeit nicht dargestellt, da hier ausschließlich konstruktive Gesichtspunkte zu erörtern sind.

Das Fluidmodul 3 weist einen Modulkörper 30 auf, der insbesondere einen metallischen Werkstoff aufweist. In dem Modulkörper 30 ist die Sensormodulaufnahme 4 in Form einer gestuften, Bohrung ausgebildet. Die Sensormodulaufnahme 4 weist eine durch eine radiale Stufe gebildete Gegenfläche 35 auf an welcher die äußere axiale Anschlagfläche 25 des Montagerings 20 im montierten Zustand anliegt. Damit ist bestimmungsgemäß die Position der Messmembran 12 bezüglich des Modulkörpers 30 festgelegt.

Zum Fixieren des Sensormoduls 2 weist die Messanordnung 1 beispielsweise einen Spannkörper 34 auf, der nach dem Einsetzen des Sensormoduls 2 in die Sensormodulaufnahme 4 auf eine der Druckmesszelle 10 abgewandte zweite Stirnfläche des Montagerings 20 einwirkt. Der Spannkörper 34 ist seinerseits mit einem Schraubring 38 in der Sensormodulaufnahme gesichert.

Das Fluidmodul 3 kann einen auswechselbaren medienberührenden Elastomerkörper 39 aufweisen, welcher aufweist, und welcher an einer Unterseite des ersten Modulkörpers 30 angeordnet ist welcher an einer unterseite des Modulkörper 30 angeordnet ist und das Sensormodul 2 gegenüber einem Fluidkanal 5 abdichtet, welcher an der Unterseite des Modulkörpers verläuft, und gegenüber dem Sensormodul durch eine Bodenplatte begrenzt ist.

Bei kleinen Fluidkanalquerschnitten hängt deren jeweiliger Wert im Bereich der Messmembran 12 erheblich von deren axialer Position und Neigungswinkel ab. Daher trägt das erfindungsgemäße Sensormodul mit seiner genauen Positionierung der Druckmesszelle zu einer relevanten Steigerung der Messgenauigkeit der Messanordnung bei.

## Patentansprüche

1. Messanordnung (1), umfassend ein Drucksensormodul (2) und ein Fluidmodul (3),
wobei das Drucksensormodul (2), eine Druckmesszelle (10); und einen Montagering (20) umfasst,
wobei die Druckmesszelle einen Gegenkörper (14), eine Messmembran (12) und einen Wandler zum Wandeln einer druckabhängigen Auslenkung der Messmembran in mindestens ein elektrisches oder optisches Signal aufweist,
wobei die Messmembran (12) entlang eines umlaufenden Randes druckdicht mit dem Gegenkörper (14) verbunden ist,
wobei zwischen dem Gegenkörper (14) und der Messmembran (12) eine Messkammer gebildet ist,
wobei der Gegenkörper (14) eine der Messmembran (12) abgewandte Rückseite aufweist, die einen umlaufenden Randbereich aufweist,
wobei der Montagering (20) eine Montageöffnung aufweist,
wobei der Montagering (20) eine ringförmig umlaufende, innere Montagefläche (23) in der Montageöffnung aufweist,
der Montagering (20) eine äußere Montagefläche (25) außerhalb der Montageöffnung (21) des Montagerings (20) aufweist,
wobei die innere Montagefläche (23) eine innere axiale Anschlagebene zur Montage der Druckmesszelle definiert,
wobei die Druckmesszelle (10) mit der Rückseite voran in die Montageöffnung eingesetzt ist,
wobei der Randbereich der Rückseite des Gegenkörpers (14) mit der inneren Montagefläche (23) verklebt ist,
wobei die innere Montagefläche (23) eine Schulter (22) umfasst, welche sich von einer inneren Mantelfläche des Montagerings (20) radial einwärts erstreckt,
wobei die innere Montagefläche (23) zwischen der axialen Anschlagfläche und der inneren Mantelfläche eine ringförmig umlaufende Vertiefung aufweist, um überschüssigen Klebstoff (50) beim Verkleben der axialen Anschlagfläche mit der Rückseite des Gegenkörpers (14) aufzunehmen,
wobei das Fluidmodul (3) mindestens einen Fluidkanal (5) und eine Sensormodulaufnahme (4) aufweist, welche mit dem Fluidkanal (5) kommuniziert,
**dadurch gekennzeichnet, dass**:
die Sensormodulaufnahme (4) eine zur äußeren Montagefläche (25) des Montagerings (20) komplementäre Gegenfläche (35) aufweist,
die äußere Montagefläche (25) durch Anliegen an der Gegenfläche (35) eine Orientierung einer Montageachse des Montagerings (20) bezüglich der Gegenfläche (35) festlegt, wobei ein Normalenvektor der inneren axialen Anschlagebene parallel zur Montageachse verläuft,
die Messmembran (12) eine dem Gegenkörper (14) abgewandte Stirnseite aufweist, welche mit einem zu messenden, in dem Fluidkanal herrschenden Druck beaufschlagbar ist, und
die äußere Montagefläche gegen die Gegenfläche gespannt ist, wobei die Gegenfläche eine Ebene definiert, deren Normalenvektor gegenüber einem Normalenvektor zur Stirnseite der Messmembran (12) um nicht mehr als 10 mrad, insbesondere nicht mehr als 7 mrad und bevorzugt nicht mehr als 4 mrad verkippt ist.

2. Messanordnung (1) nach Anspruch 1, wobei die Klebstoffschicht zwischen der axialen Anschlagfläche und der Rückseite des Gegenkörpers (14) eine Stärke von nicht mehr als 40 µm, insbesondere nicht mehr als 20 µm und bevorzugt nicht mehr als 10 µm aufweist.

3. Messanordnung (1) nach einem der Ansprüche 1 bis 2, wobei ein Normalenvektor zu einer durch den Randbereich der Rückseite des Gegenkörpers (14) definierten Ebene gegenüber dem Normalenvektor der axialen Anschlagfläche um nicht mehr als 2,4 mrad, insbesondere nicht mehr als 1,2 mrad und bevorzugt nicht mehr als 0,6 mrad verkippt ist.

4. Messanordnung (1) nach einem der vorhergehenden Ansprüche wobei die Vertiefung zwischen der Anschlagfläche und der inneren Mantelfläche in einem Längsschnitt durch die Montageachse eine Fläche von nicht weniger als 0,06 mm², insbesondere nicht weniger als 0,1 mm² und bevorzugt nicht weniger als 0,15 mm² aufweist.

5. Messanordnung (1) nach einem der vorhergehenden Ansprüche wobei die Druckmesszelle einen keramischen Werkstoff, insbesondere Korund aufweist.

6. Messanordnung (1) nach einem der vorhergehen Ansprüche, wobei der Montagering (20) einen glasfaserverstärkten Kunststoff aufweist.

7. Messanordnung (1) nach einem der vorhergehen Ansprüche, wobei eine durch den umlaufenden Randbereich der Rückseite des Gegenkörpers (14) definierte Ebene bis auf Fertigungstoleranzen parallel zu einer durch die Stirnseite der Messmembran definierte Ebene (12) verläuft,

8. Messanordnung (1) nach Anspruch 1 wobei die durch den Randbereich der Rückseite des Gegenkörpers definierte Ebene von der Parallelität zur durch die Stirnseite der Messmembran definierte Ebene aufgrund von Fertigungstoleranzen um nicht mehr als 3 mrad, insbesondere nicht mehr als 1,5 mrad und bevorzugt nicht mehr als 1 mrad abweicht.

9. Messanordnung nach einem der vorhergehenden Ansprüche,
wobei der Fluidkanal einen der Messmembran (12) gegenüberliegenden Wandbereich aufweist,
wobei der mittlere Abstand des Wandbereichs von der Messmembran (12) oder von einer die Messmembran (12) abdeckenden Dichtungsmatte nicht mehr als ein Fünftel, insbesondere nicht mehr als ein Zehntel, und bevorzugt nicht mehr als ein Zwanzigstel des Durchmessers der Messmembran (12) beträgt.

10. Messanordnung (1) nach einem der vorhergehenden Ansprüche,
wobei die Sensormodulaufnahme eine erste Dichtfläche aufweist,
wobei der Montagering (20) stirnseitig eine zweite Dichtfläche aufweist,
wobei die erste Dichtfläche und die zweite Dichtfläche einander zugewandt sind,
wobei mindestens eine der Dichtflächen der Mantelfläche der Druckmesszelle zugewandt ist, und
wobei zwischen den Dichtflächen und der Mantelfläche der Druckmesszelle ein Dichtring elastisch eingespannt ist.

## Claims

1. Measuring arrangement (1) comprising a pressure sensor module (1) and a fluid module (3),
wherein the pressure sensor module (2) comprises a pressure measuring cell (10) and a mounting ring (20),
wherein the pressure measuring cell comprises a counter-body (14), a measuring membrane (12) and a converter designed to convert a pressure-dependent deflection of the measuring membrane to at least an electrical or optical signal, wherein the measuring membrane (12) is connected to the counter-body (14) in a pressure-tight manner along a circumferential edge,
wherein a measuring chamber is formed between the counter-body (14) and the measuring membrane (12),
wherein the counter-body (14) has a rear side facing away from the measuring membrane (12), said rear side having a circumferential marginal zone,
wherein the mounting ring (20) has a mounting opening,
wherein the mounting ring (20) has an annular circumferential inner mounting surface (23) in the mounting opening,
wherein the mounting ring (20) has an outer mounting surface (25) outside the mounting opening (21) of the mounting ring (20),
wherein the inner mounting surface (23) defines an inner axial stop plane for the mounting of the pressure measuring cell,
wherein the pressure measuring cell (10) is inserted into the mounting opening with the rear side first,
wherein the marginal zone of the rear side of the counter-body (14) is stuck to the inner mounting surface (23),
wherein the inner mounting surface (23) comprises a shoulder (22), which extends radially inwards from an inner lateral surface of the mounting ring (20), wherein the inner mounting surface (23) has an annular circumferential indentation between the axial stop surface and the inner lateral surface to receive excess adhesive (50) when the axial stop surface is being glued to the rear side of the counter-body (14),
wherein the fluid module (3) has at least a fluid channel (5) and a sensor module support (4) which communicates with the fluid channel (5),
**characterized in that:**
the sensor module support (4) has a counter-surface (35) that is complementary to the outer mounting surface (25) of the mounting ring (20),
the outer mounting surface (25) defines an orientation of a mounting axis of the mounting ring (20) in relation to the counter-surface (35) by resting on the counter-surface (35), wherein a normal vector of the inner axial stop plane is parallel to the mounting axis,
the measuring membrane (12) has a front face facing away from the counter-body (14) which can be subjected to a pressure to be measured that is present in the fluid channel, and
the outer mounting surface is clamped against the counter-surface, wherein the counter-surface defines a plane whose normal vector is inclined in relation to a normal vector at the front face of the measuring membrane (12) by not more than 10 mrad, particularly not more than 7 mrad and preferably not more than 4 mrad.

2. Measuring arrangement (1) as claimed in Claim 1, wherein the adhesive layer between the axial stop surface and the rear side of the counter-body (14) has a thickness of not more than 40 µm, particularly not more than 20 µm and preferably not more than 10 µm.

3. Measuring arrangement (1) as claimed in one of the Claims 1 to 2, wherein a normal vector to a defined plane defined by the marginal zone of the rear side of the counter-body (14) is inclined in relation to the normal vector of the axial stop surface by not more than 2.4 mrad, particularly not more than 1.2 mrad and preferably not more than 0.6 mrad.

4. Measuring arrangement (1) as claimed in one of the previous claims, wherein the indentation between the stop surface and the inner lateral surface in a longitudinal section through the mounting axis has a surface of not less than 0.06 mm², particularly of not less than 0.1 mm² and preferably of not less than 0.15 mm².

5. Measuring arrangement (1) as claimed in one of the previous claims, wherein the pressure measuring cell features a ceramic material, particularly corundum.

6. Measuring arrangement (1) as claimed in one of the previous claims, wherein the mounting ring (20) features a glass-fiber reinforced plastic.

7. Measuring arrangement (1) as claimed in one of the previous claims, wherein a plane defined by the circumferential marginal zone of the rear side of the counter-body (14) extends parallel to a plane (12) defined by the front face of the measuring membrane, apart from fabrication tolerances.

8. Measuring arrangement (1) as claimed in Claim 1, wherein, on account of fabrication tolerances, the plane defined by the marginal zone of the rear side of the counter-body deviates from the parallelism to the plane defined by the front face of the measuring membrane by not more than 3 mrad, particularly not more than 1.5 mrad and preferably by not more than 1 mrad.

9. Measuring arrangement (1) as claimed in one of the previous claims,
wherein the fluid channel has a wall area opposite the measuring membrane (12), wherein the average distance of the wall area in relation to the measuring membrane (12) or to a sealing mat covering the measuring membrane (12) is not more than a fifth, particularly not more than a tenth and preferably not more than a twentieth of the diameter of the measuring membrane (12).

10. Measuring arrangement (1) as claimed in one of the previous claims, wherein the sensor module support has a first sealing surface,
wherein the mounting ring (20) has a second sealing surface on the front face,
wherein the first sealing surface and the second sealing surface face one another, wherein at least one of the sealing surfaces faces towards the lateral surface of the pressure measuring cell, and
wherein a sealing ring is clamped between the sealing surfaces and the lateral surface of the pressure measuring cell.

## Revendications

1. Configuration de mesure (1) comprenant un module capteur de pression (1) et un module fluide (3),
pour laquelle le module capteur de pression (2) comprend une cellule de mesure de pression (10) et une bague de montage (20),
la cellule de mesure de pression comprenant un contre-corps (14), une membrane de mesure (12) et un convertisseur destiné à convertir une déviation fonction de la pression de la membrane de mesure en au moins un signal électrique ou optique,
la membrane de mesure (12) étant reliée, le long d'un bord périphérique, de façon étanche à la pression, avec le contre-corps (14),
une chambre de mesure étant formée entre le contre-corps (14) et la membrane de mesure (12),,
le contre-corps (14) présentant une face arrière située à l'opposé de la membrane de mesure (12), laquelle face arrière présente une zone marginale périphérique, la bague de montage (20) présentant une ouverture de montage,
la bague de montage (20) présentant une surface de montage intérieure (23) périphérique, annulaire, dans l'ouverture de montage,
la bague de montage (20) présentant une surface de montage extérieure (25) à l'extérieur de l'ouverture de montage (21) de la bague de montage (20),
la surface de montage intérieure (23) définissant un plan de butée axial intérieur par rapport au montage de la cellule de mesure de pression,
la cellule de mesure de pression (10) étant insérée dans l'ouverture de montage avec la face arrière en premier,
la zone marginale de la face arrière du contre-corps (14) étant collée avec la surface de montage intérieure (23),
la surface de montage intérieure (23) comprenant un épaulement (22), lequel s'étend radialement vers l'intérieur à partir d'une surface latérale intérieure de la bague de montage (20),
la surface de montage intérieure (23) présentant un évidement périphérique annulaire entre la surface de butée axiale et la surface latérale intérieure pour recevoir l'excès d'adhésif (50) lorsque la surface de butée axiale est collée sur la face arrière du contre-corps (14),
le module fluide (3) comportant au moins un canal de fluide (5) et un support de module capteur (4) qui communique avec le canal de fluide (5),
**caractérisée**
**en ce que** le support de module capteur (4) présente une contre-surface (35) complémentaire de la surface de montage extérieure (25) de la bague de montage (20),
**en ce que** la surface de montage extérieure (25) définit une orientation d'un axe de montage de la bague de montage (20) par rapport à la contre-surface (35) en prenant appui sur la contre-surface (35), un vecteur normal du plan de butée axial intérieur étant parallèle à l'axe de montage,
**en ce que** la membrane de mesure (12) présente une face frontale opposée au contre-corps (14) qui peut être soumise à une pression à mesurer qui règne dans le canal de fluide, et
**en ce que** la surface de montage extérieure est serrée contre la contre-surface, la contre-surface définissant un plan dont le vecteur normal est incliné par rapport à un vecteur normal à la face frontale de la membrane de mesure (12) de 10 mrad au maximum, notamment de 7 mrad au maximum et de préférence de 4 mrad au maximum.

2. Configuration de mesure (1) selon la revendication 1, pour laquelle la couche d'adhésif entre la surface de butée axiale et la face arrière du contre-corps (14) présente une épaisseur de 40 µm au maximum, notamment de 20 µm au maximum et de préférence de 10 µm au maximum.

3. Configuration de mesure (1) selon l'une des revendications 1 à 2, pour laquelle un vecteur normal à un plan défini par la zone marginale de la face arrière du contre-corps (14) est incliné par rapport au vecteur normal de la surface de butée axiale de 2,4 mrad au maximum, notamment de 1,2 mrad au maximum et de préférence de 0,6 mrad au maximum.

4. Configuration de mesure (1) selon l'une des revendications précédentes, pour laquelle l'évidement entre la surface de butée et la surface latérale intérieure dans une coupe longitudinale à travers l'axe de montage présente une surface d'au moins 0,06 mm², notamment d'au moins 0,1 mm² et de préférence d'au moins 0,15 mm².

5. Configuration de mesure (1) selon l'une des revendications précédentes, pour laquelle la cellule de mesure de pression présente un matériau céramique, notamment du corindon.

6. Configuration de mesure (1) selon l'une des revendications précédentes, pour laquelle la bague de montage (20) comporte une matière plastique renforcée de fibres de verre.

7. Configuration de mesure (1) selon l'une des revendications précédentes, pour laquelle un plan défini par la zone marginale périphérique de la face arrière du contre-corps (14) s'étend parallèlement - si l'on exclut les tolérances de fabrication - à un plan (12) défini par la face frontale de la membrane de mesure.

8. Configuration de mesure (1) selon la revendication 1, pour laquelle le plan défini par la zone marginale de la face arrière du contre-corps s'écarte du parallélisme par rapport au plan défini par la face frontale de la membrane de mesure de 3 mrad au maximum, notamment de 1,5 mrad au maximum et de préférence de 1 mrad au maximum, en raison des tolérances de fabrication.

9. Configuration de mesure (1) selon l'une des revendications précédentes, pour laquelle le canal de fluide présente une zone de paroi opposée à la membrane de mesure (12),
pour laquelle la distance moyenne de la zone de paroi par rapport à la membrane de mesure (12) ou à un mat d'étanchéité recouvrant la membrane de mesure (12) n'est pas supérieure à un cinquième, notamment pas supérieure à un dixième et de préférence pas supérieure à un vingtième du diamètre de la membrane de mesure (12).

10. Configuration de mesure (1) selon l'une des revendications précédentes, pour laquelle le support de module capteur présente une première surface d'étanchéité,
la bague de montage (20) présente côté frontal une deuxième surface d'étanchéité,
la première surface d'étanchéité et la deuxième surface d'étanchéité se faisant face,
au moins l'une des surfaces d'étanchéité faisant face à la surface latérale de la cellule de mesure de pression, et
une bague d'étanchéité élastique étant serrée entre les surfaces d'étanchéité et la surface latérale de la cellule de mesure de pression.
